# EUROPÄISCHE PATENTSCHRIFT

(11) **EP 0 666 160 B1**
(45) Veröffentlichungstag und Bekanntmachung des Hinweises auf die Patenterteilung: **16.09.1998**
(21) Anmeldenummer: 95100808.5
(22) Anmeldetag: 21.01.1995
(51) Int. Cl.: B29C 45/17

(54) **Formschliesseinrichtung für Kunststoff-Spritzgiessmaschinen zur Aufnahme grosser und schwerer Formwerkzeuge**
Mould closing device in plastic injection moulding machines for mounting voluminous and heavy moulds
Dispositif de fermeture de moule dans des machines à injecter les matières plastiques le montage de moules grands et lourds

(30) Priorität: 02.02.1994 DE 4403079
(43) Veröffentlichungstag der Anmeldung: 09.08.1995
(73) Patentinhaber: Hemscheidt Maschinentechnik Schwerin GmbH & Co., 19061 Schwerin (DE)
(72) Erfinder: Stein, Walter, D-19061 Schwerin (DE)
(74) Vertreter: Jaap, Reinhard

(56) Entgegenhaltungen:
- EP-A- 0 551 584
- DE-C- 3 145 973
- NL-A- 293 631
- PATENT ABSTRACTS OF JAPAN vol. 14 no. 567 (M-1059) ,17.Dezember 1990 & JP-A-02 241715 (TOYO MACH & METAL CO LTD) 26.September 1990,

## Beschreibung

Die Erfindung betrifft eine Formschließeinrichtung zur Aufnahme großer und schwerer Formwerkzeuge mit einer Masse von bis zu 130 t für Spritzgießmaschinen zur Kunststoffverarbeitung mit einer festen Werkzeugaufspannplatte und einer beweglichen Werkzeugaufspannplatte. Die bewegliche Werkzeugaufspannplatte ist auf einem Maschinenschlitten angeordnet, der aus zwei Längsholmen besteht, die durch ein Mittelstück verbunden sind. Die feste Werkzeugaufspannplatte ist auf einem Maschinengestell abgestützt, und die bewegliche Werkzeugaufspannplatte ist über die Längsholme des Maschinenschlittens mittels Wälzführungen und Führungsschienen auf dem Maschinengestell verfahrbar aufgenommen. Beide Werkzeugaufspannplatten nehmen je eine Formhälfte des Formwerkzeuges auf und sind über freitragende oder durchgehende Säulen miteinander verbindbar oder verbunden. Die Säulen sind in Abhängigkeit von der Werkzeugeinbauhöhe durch eine Werkzeughöhenverstellvorrichtung einstellbar. Zum Zusammen- oder Auseinanderfahren der Formhälften des Formwerkzeuges wird die bewegliche Werkzeugaufspannplatte mit Hilfe eines oder mehrerer Eilgangzylinder in die Öffnungs- oder Schließstellung gefahren. Durch Schließzylinder wird in dieser Position die Schließ- und Zuhaltekraft und die Aufreißkraft aufgebracht. Gattungsgemäße Lösungen sind aus der DE 3145973 C1, der DE OS 1931432 oder den PATENT ABSTRACTS OF JAPAN JP-2241715-A bekannt. So wird in der DE 3145973 C1 die bewegliche Werkzeugaufspannplatte zur Seite und vertikal über in Winkelstücken befindliche Laufrollen, die in Kassetten angeordnet sind, abgestützt. Jedes Stützorgan umfaßt eine seitliche und vertikale Rollengruppe, die in einer Aufnahmevorrichtung aufgenommen wird und durch Einstellschrauben zur Führungsschiene einstellbar sind. In der DE OS 1931432 wird eine Wälzführung vorgeschlagen, durch die die unterschiedlich wirkenden senkrechten Kräfte im geöffneten und im geschlossenen Zustand des Formwerkzeuges durch entgegenwirkende Federkräfte oder Arbeitszylinder, deren Druck einstellbar ist, kompensiert werden sollen. Eine ähnliche Wälzführung ist auch in der JP-2241715-A beschrieben, die eine Wälzlager-Abstützung betrifft, zum Abfangen der unterschiedlichen Vertikalkräfte. Durch zusätzliche Einstellmöglichkeiten sind die Säulen in Abhängigkeit von der unterschiedlichen Belastung durch die Formhälften des Formwerkzeuges auf eine Durchbiegung von f ≈ 0 einstellbar, um dadurch Parallelitätsabweichungen zwischen beiden Werkzeugaufspannplatten zu vermeiden.

Der Nachteil aller bisher bekannten Wälzführungen besteht nun darin, daß sie nur entsprechend der zulässigen Tragzahl der Wälzkörper belastbar sind. In der Praxis des Spritzgießprozesses treten jedoch drei unterschiedliche Belastungsfälle auf, bei denen die Wälzführungen so ausgelegt werden müssen, daß sie den höchsten Belastungen noch gerade standhalten. Die geringste Belastung ruht auf den Wälzführungen, wenn sich die bewegliche Werkzeugaufspannplatte mit der Formhälfte in der Öffnungsstellung im statischen Betriebszustand befindet. Im dynamischen Betriebszustand, wenn die bewegliche Werkzeugaufspannplatte mit der Formhälfte in die Schließ- oder Öffnungsstellung verfahren wird, erhöht sich die Belastung durch die wirkenden Beschleunigungskräfte. Die auf die Wälzführungen einwirkenden Kräfte sind jedoch am größten, wenn sich die Werkzeugaufspannplatten mit den Formhälften der Formwerkzeuge in der Schließstellung befinden und die Schließkräfte oder die Aufreißkräfte auf das Formwerkzeug einwirken. In diesem Betriebszustand müssen zum Beispiel Unparallelitäten in der Werkzeugteilfuge zwischen den Formhälften des Formwerkzeuges, die aus maßlich bedingten Toleranzen der zueinander bewegten Teile und der Führungsungenauigkeit mit der die Teile zueinander bewegt werden, resultieren, durch zusätzliche Kräfte überwunden werden. Diese zusätzlichen Kräfte müssen ebenfalls von den Wälzführungen aufgenommen werden. Durch das Eigengewicht des Maschinenschlittens mit der beweglichen Werkzeugaufspannplatte und dem Formwerkzeug mit einer Masse von bis zu 130 t können sich dadurch rechnerisch Belastungswerte für die Wälzführungen ergeben, die ca. 40 bis 50 % über den Belastungswerten der Wälzführungen in der Öffnungsstellung der Formschließeinrichtung im statischen oder dynamischen Betriebszustand liegen. Für derartige extreme Belastungsunterschiede sind Wälzführungen entweder sehr teuer oder aber nicht mehr beschaffbar.
Aufgabe der Erfindung ist es, für einen verfahrbaren Maschinenschlitten, der an seinen vier Eckpunkten Wälzführungen besitzt und im statischen Betriebszustand bei geschlossenem Formwerkzeug höhere Belastungskräfte aufnimmt als im statischen Betriebszustand bei geöffnetem Formwerkzeug oder im dynamischen Betriebszustand, eine Lastausgleichseinrichtung und eine Lastbegrenzungseinrichtung zu schaffen, durch die die Wälzführungen im statischen Betriebszustand bei geschlossenem Formwerkzeug entlastet werden, und durch die in den übrigen Betriebszuständen eine sehr sichere Auflage des Maschinenschlittens in mindestens vier Auflagepunkten zu gewährleisten ist.
Erfindungsgemäß wird die Aufgabe in Verbindung mit dem Oberbegriff des Patentanspruchs 1 dadurch gelöst, daß an den Eckpunkten des Maschinenschlittens Lagerstellen zur mittigen Aufnahme von Pendeltraversen angeordnet sind. An den Enden der Pendeltraversen sind in Gleitlagern, die als Kalottenlager ausgebildet sind, die Wälzführungen, bestehend aus an sich bekannten Rollenumlaufschuhen, längs- und quer drehbeweglich gelagert. Die Rollenumlaufschuhe sind in den Pendeltraversen an den vier Eckpunkten des Maschinenschlittens jeweils einzeln oder mehrfach vorzugsweise hintereinander in Abhängigkeit von der erforderlichen Lastaufnahme angeordnet.

Die vorderen Pendeltraversen, die an der der festen Werkzeugaufspannplatte zugewandten Seite des Maschinenschlittens angebracht sind, sind direkt in einem Gleitlager an der Unterseite der Längsholme des Maschinenschlittens drehbeweglich gelagert. Die Pendeltraversen, die sich an der rückwärtigen Seite der beweglichen Werkzeugaufspannplatte befinden, werden von jeweils einem Exzenter einer Exzenterwelle aufgenommen. Die zur Längsmittelachse des Maschinenschlittens gerichteten äußeren zentrischen Abschnitte der Exzenterwellen sind fest über einen Torsionsstab so miteinander verbunden, daß die Exzentrizität der beiden Exzenter in der Horizontalebene eine entgegengesetzte Richtung zueinander hat. Die beiden zum Exzenter benachbarten zentrischen Abschnitte jeder Exzenterwelle sind in Gleitlagern des jeweiligen Längsholmes vom Maschinenschlitten gelagert. Auf jedem Exzenter ist beidseitig von jeder Pendeltraverse ein Tragrahmen drehbeweglich angeordnet, der an seiner Unterseite Druckplatten besitzt, die auf dem Maschinengestell abstützbar sind. Zur Aufnahme des Kippmomentes während der Anfahr- und Bremsbewegung des Maschinenschlittens sind die Tragrahmen über Federn an den Pendeltraversen abgestützt.
Ferner sind an der Unterseite von den Längsholmen des Maschinenschlittens weitere Druckplatten zur statischen Abstützung angeordnet. In der weiteren Ausgestaltung der Erfindung sind die Druckplatten zur Entlastung der Wälzführungen an der Unterseite vom Maschinenschlitten in der Nähe vom Massenschwerpunkt der bewegten Masse und an der Vorderseite vom Maschinenschlitten angeordnet. Bei einer Anordnung von mehreren Rollenumlaufschuhen in den Pendeltraversen wird jeder Rollenumlaufschuh mittig in einem Kalottenlager aufgenommen. Bei einer Einzelanordnung der Rollenumlaufschuhe, wenn nur geringere Kräfte aufzunehmen sind, ist jeder Rollenumlaufschuh an seinen beiden Enden in je einem Kalottenlager längs- und quer drehbeweglich gelagert. Die Vorteile der erfinderischen Lösung bestehen darin, daß bei sehr großen und schweren Maschinenschlitten, die in einem extremen statischen Betriebszustand um ca. 50 % höhere Vertikalkräfte aufnehmen müssen, die vorhandenen Wälzführungen durch die Lastbegrenzungseinrichtung vor Überbelastung geschützt werden. Ein weiterer wesentlicher Vorteil besteht darin, daß die bei großen und schweren Maschinenschlitten, Werkzeugaufspannplatten und Formhälften der Formwerkzeuge vorhandenen Unebenheiten und Maßabweichungen an den Führungsflächen im geöffenten statischen und im dynamischen Betriebszustand mit Hilfe der Lastausgleichseinrichtung so überwunden werden, daß einerseits immer eine sichere Auflage der Wälzführungen an den vier Eckpunkten des Maschinenschlittens gewährleistet ist und andererseits eine Schiefstellung der beweglichen Werkzeugaufspannplatte vermieden wird. Schließlich ist es mit Hilfe der erfinderischen Lösung möglich, Rollenumlaufschuhe einzusetzen, bei denen nur die Kräfte aus dem dynamischen Betriebszustand der zulässigen Tragfähigkeit entsprechen müssen. Durch die Lastausgleichs- und Lastbegrenzungseinrichtung wird somit die Lebensdauer der Wälzführung erhöht und werden die Herstellungskosten gesenkt, wodurch die Lösung sehr ökonomisch ist.

Nachstehend wird die Erfindung in einem Ausführungsbeispiel näher erläutert. In den zugehörigen Zeichnungen ist dargestellt:
- Fig. 1: Formschließeinrichtung mit Formwerkzeug im geöffneten Zustand
- Fig. 2: Formschließeinrichtung mit Formwerkzeug im geschlossenen Zustand
- Fig 3: Bewegliche Werkzeugaufspannplatte mit Maschinenschlitten in der Draufsicht
- Fig. 4: Schematische Darstellung des Maschinenschlittens gemäß der Schnittlinie A-A in Figur 3
- Fig. 5: Vordere Pendeltraverse mit zwei Rollenumlaufschuhen am Maschinenschlitten, die der festen Werkzeugaufspannplatte zugewandt sind
- Fig. 6: Schnitt durch die Lagerstelle eines Rollenumlaufschuhs gemäß Linie B-B in Figur 5
- Fig. 7: Hintere Pendeltraverse mit Tragrahmen für zwei Rollenumlaufschuhe am Maschinenschlitten für die rückwärtige Seite der beweglichen Werkzeugaufspannplatte
- Fig. 8: Vertikalschnitt durch die Lagerstellen des Maschinenschlittens an der rückwärtigen Seite der beweglichen Werkzeugaufspannplatte gemäß der Linie C-C in Fig. 3
- Fig. 9: Horizontalschnitt durch die Lagerstellen des Maschinenschlittens gemäß der Linie D-D in Figur 8
- Fig. 10: Schnitt durch den Torsionsstab nach der Linie E-E in Figur 8
- Fig. 11: Schnitt durch den Torsionsstab nach der Linie F-F in Figur 10
- Fig. 12: Vordere Pendeltraverse mit einem Rollenumlaufschuh
- Fig. 13: Hintere Pendeltraverse mit einem Rollenumlaufschuh
- Fig. 14: Belastungsschema für die vordere Wälzführung bei verspanntem Formwerkzeug
- Fig. 15: Belastungsschema für die hintere Wälzführung bei verspanntem Formwerkzeug
- Fig. 16: Durchfederung infolge Verdrehung im Torsionsstab

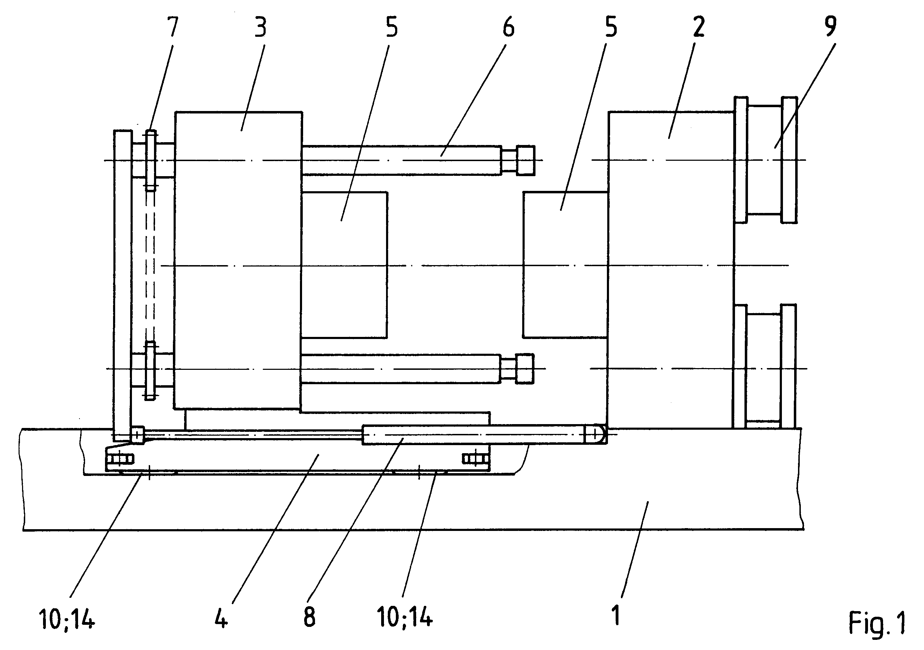

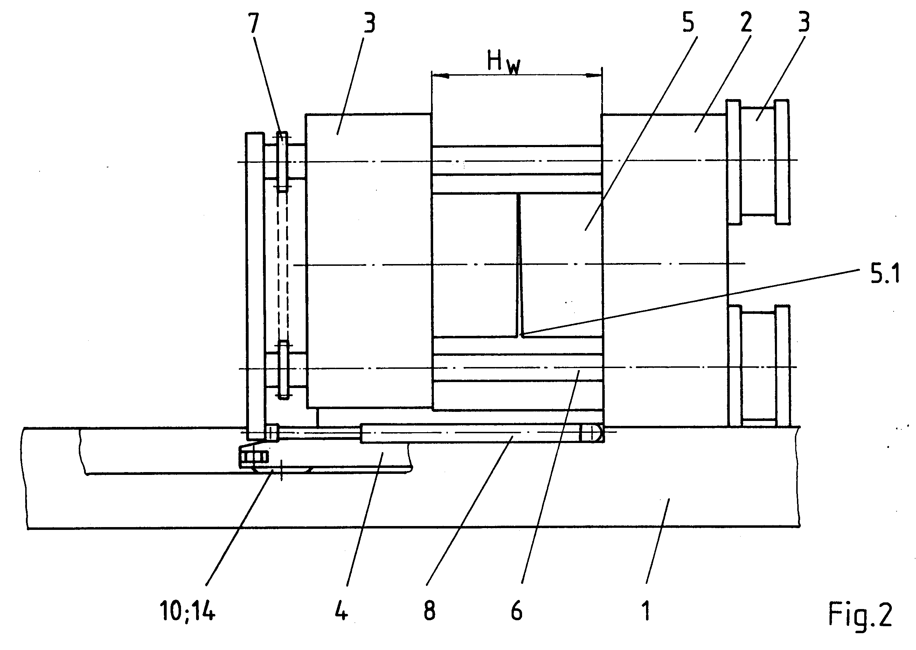

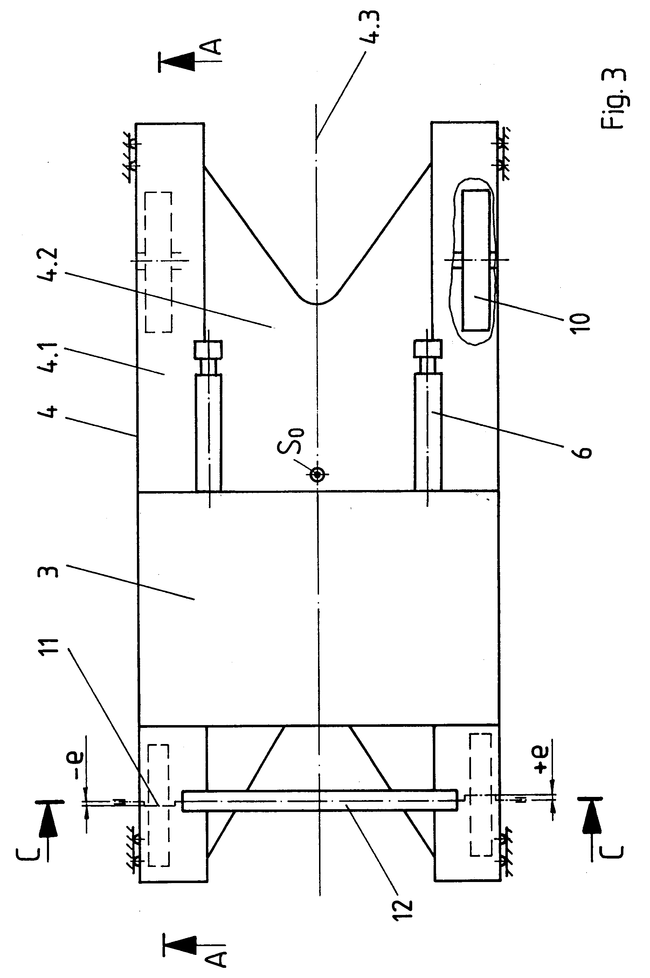

In den Figuren 1 und 2 ist eine Formschließeinrichtung für eine Spritzgießmaschine zur Kunststoffverarbeitung von ihrem grundsätzlichen Aufbau her erkennbar, wobei die Spritzeinheit nicht dargestellt ist. Die Formschließeinrichtung besteht aus einer festen Werkzeugaufspannplatte 2 und einer beweglichen Werkzeugaufspannplatte 3. Die bewegliche Werkzeugaufspannplatte 3 ist auf einem Maschinenschlitten 4 angeordnet, der aus zwei Längsholmen 4.1 besteht, die durch ein Mittelstück 4.2 verbunden sind, was aus Figur 3 näher ersichtlich ist. Die feste Werkzeugaufspannplatte 2 ruht auf einem Maschinengestell 1. Die Längsholme 4.1 des Maschinenschlittens 4 sind mit der beweglichen Werkzeugaufspannplatte 1 auf Führungsschienen, die nicht erkennbar sind, verfahrbar. Beide Werkzeugaufspannplatten 2, 3 nehmen je eine Formhälfte eines Formwerkzeuges 5 auf und werden im Ausführungsbeispiel durch freitragende Säulen 6 miteinander verbunden. Die Säulen 6 werden in Abhängigkeit von der Werkzeugeinbauhöhe H_{W} durch eine Werkzeughöhenverstellvorrichtung 7 eingestellt. Zum Zusammen- oder Auseinanderfahren der Formhälften des Formwerkzeuges 5 wird die bewegliche Werkzeugaufspannplatte mit Hilfe von einem oder mehreren Eilgangzylindern 8 in die Öffnungsstellung gefahren, die in Figur 1 erkennbar ist oder in die Schließstellung gebracht, die in Figur 2 dargestellt ist. In der Schließstellung wird dann nach einem Verriegelungsvorgang, der nicht erkennbar ist, mit Hilfe der Schließzylinder 9 die Schließ- und Aufreißkraft aufgebracht. In der Figur 2 ist in einer übertriebenen Darstellung veranschaulicht, daß in der Schließstellung zwischen den beiden Formhälften des Formwerkzeuges 5 ein Keilspalt 5.1 vorhanden ist und keine Planparallelität besteht. Wie bereits eingangs erwähnt wurde, muß dieser Keilspalt 5.1, der aus Ebenheitsabweichungen der Führungsbahnen und vorhandenen Maßtoleranzen resultiert, mit Hilfe der Schließkraft, die durch die Schließzylinder 9 aufgebracht wird, überwunden werden. Bis die beiden Werkzeughälften des Formwerkzeuges 5 planparallel aneinander liegen, können gegenüber dem statischen Betriebszustand bei geöffnetem Formwerkzeug bis zu 50 % höhere Vertikalkräfte auftreten, die bei sehr großen und schweren Formwerkzeugen von den Wälzführungen 10, 14 nicht mehr aufgenommen werden können oder aber zu einem vorzeitigen Verschleiß führen.
Mit Hilfe der erfindungsgemäßen Lösung werden nun die Wälzführungen 10, 14 in dem Betriebszustand in dem die größte Belastung auftritt, durch eine Lastbegrenzungseinrichtung entlastet.

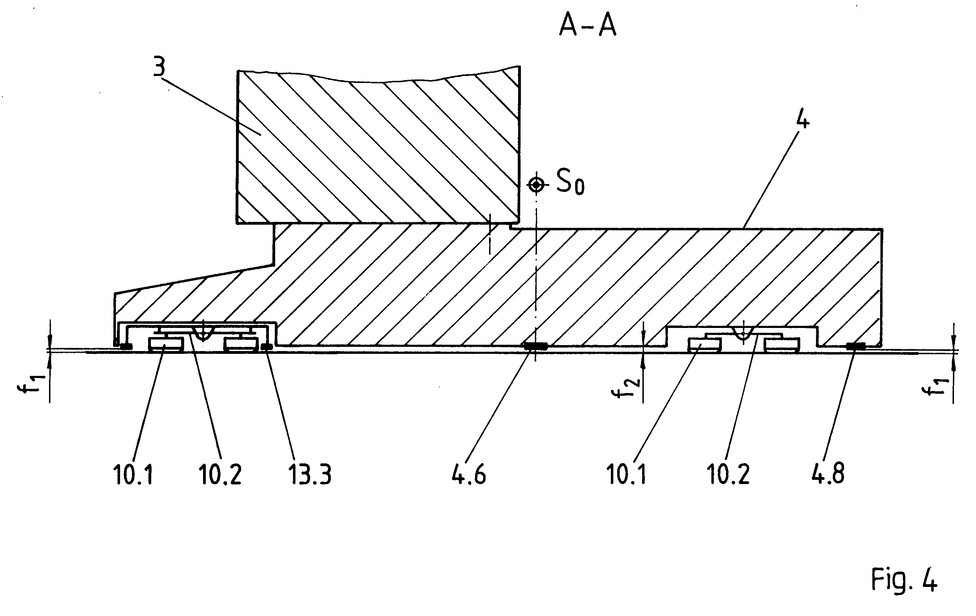

In Figur 3 ist in einer Draufsicht und in Figur 4 in einer Schnittdarstellung nach Linie A-A in Figur 3 in der Vorderansicht der Maschinenschlitten 4 mit der beweglichen Werkzeugaufspannplatte 3 ohne Formwerkzeughälfte schematisch mit den an den Eckpunkten angeordneten Wälzführungen 10 erkennbar. Aus der Darstellung in Figur 3 ist ersichtlich, daß sich der Schwerpunkt Sₒ der bewegten Masse auf der Längsmittelachse 4.3 des Maschinenschlittens 4 zwischen den Säulen 6 befindet. Daraus ergibt sich, daß die vorderen Wälzführungen 10 bzw. 14 in allen geschilderten Betriebszuständen am höchsten belastet sind. In den Figuren 4, 5 und 7 ist erkennbar, daß die Wälzführungen 10 aus an sich bekannten Rollenumlaufschuhen 10.1 bestehen, die vorzugsweise paarweise hintereinander in einer Pendeltraverse 10.2 drehbeweglich gelagert sind. Ferner sind an der Unterseite der Längsholme 4.1 des Maschinenschlittens 4 an dessen Vorderseite und unter dem Schwerpunkt der bewegten Masse Sₒ Druckplatten 4.8 angeordnet, deren Unterseite im entlasteten Zustand um das Spiel f₁ über der Führungsebene des Maschinengestelles 1 liegt. In einer jüngeren Anmeldung (DE P 4425092.4-16) wird eine Lösung vorgeschlagen, wie dieses Spiel zwischen der Wälzebene und den Druckplatten an der Unterseite der Längsholme 4.1 vom Maschinenschlitten einstellbar gestaltet werden kann.

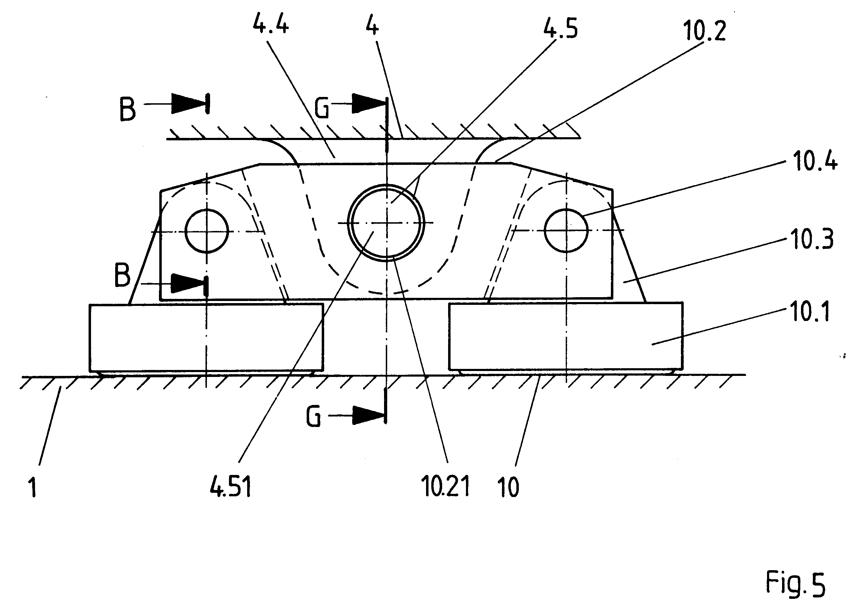

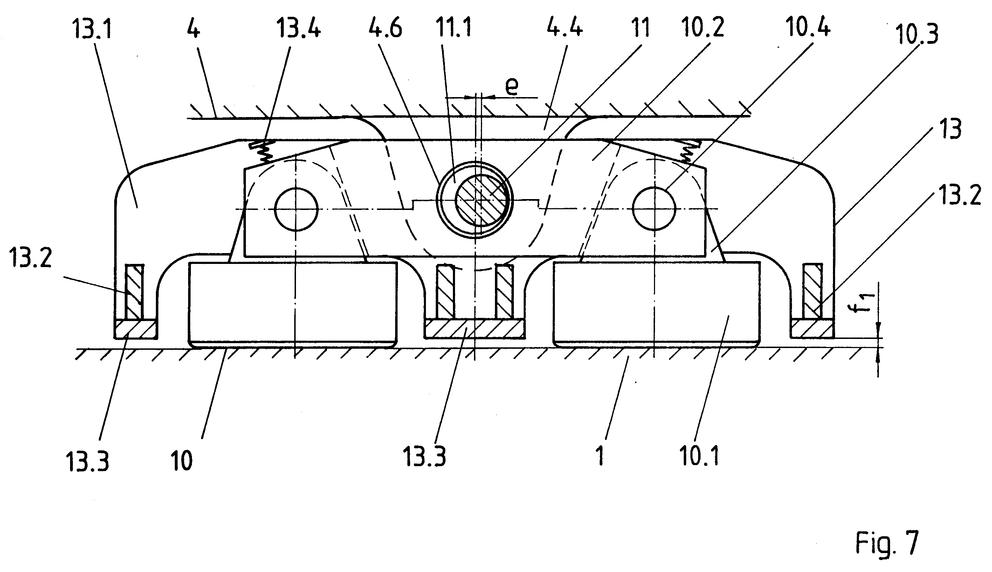

In Figur 5 ist eine vordere, der festen Werkzeugaufspannplatte 2 zugewandte Pendeltraverse 10.2 und in Figur 7 eine an der rückwärtigen Seite von der beweglichen Werkzeugaufspannplatte 3 angeordnete Pendeltraverse 10.2 dargestellt, wobei der Maschinenschlitten 4 nur angedeutet ist.

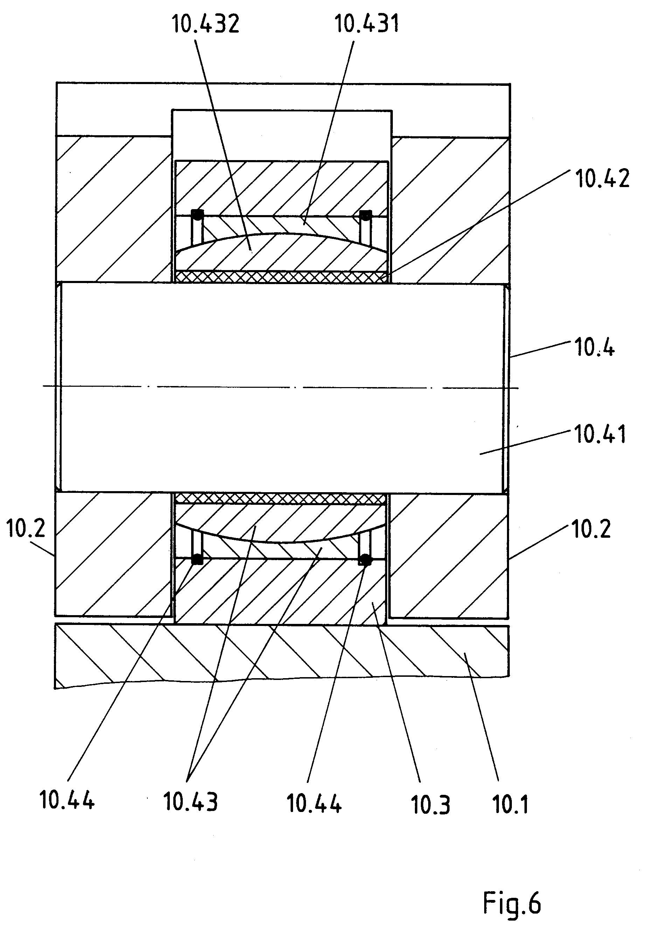

An der vorderen Seite vom Maschinenschlitten 4, die sich dichter am Schwerpunkt Sₒ von der bewegten Masse befindet, ist eine möglichst stabile und konstante Höhenposition erforderlich. Erreicht wird diese nahezu konstante Lage dadurch, daß die Pendeltraversen 10.2 an der vorderen Seite des Maschinenschlittens 4 unmittelbar und direkt in ihrer Mitte in einem Gleitlager 4.5 im Maschinenschlitten 4 in einer Lagerstelle 4.4 gelagert sind, was aus Figur 5 ersichtlich ist. Das Gleitlager 4.5 besteht aus dem Lagerbolzen 4.51, der drehfest in der Lagerstelle 4.4 des Maschinenschlittens 4 angeordnet ist, und der Lagerbuchse 10.21, die in der Pendeltraverse 10.2 fest aber auf dem Lagerbolzen 4.51 drehbeweglich ist. Die mehrfach hintereinander angeordneten Rollenumlaufschuhe 10.1 werden an den Enden der Pendeltraversen 10.2 in besonderen Gleitlagern 10.4 aufgenommen. Dazu ist an jedem Rollenumlaufschuh 10.1 an der Oberseite ein Lagerbock 10.3 vorhanden. Der Lagerbock 10.3 mit dem Rollenumlaufschuh 10.1 ist an beiden Enden der Pendeltraverse 10.2 längs- und quer drehbeweglich gelagert. In Figur 6 sind in einer vergrößerten Schnittdarstellung gemäß Linie B-B in Figur 5 die Einzelheiten der Gleitlagerung erkennbar. Das Gleitlager 10.4 besteht aus dem Lagerbolzen 10.41, der in der Pendeltraverse 10.2 mittels einer Preßpassung aufgenommen ist. Auf dem Lagerbolzen 10.41 ist mittig auf einer Lagerbuchse 10.42 das Kalottenlager 10.43 angeordnet. Das Kalottenlager 10.43 besteht aus einer äußeren Lagerschale 10.431, die an der Innenseite konkav geformt ist und einer inneren Lagerschale 10.432, die an der Außenseite konvex geformt ist. Das Kalottenlager 10.43 wird im Lagerbock 10.3 der am Rollenumlaufschuh 10.1 befestigt ist, aufgenommen. Durch diese Lagerung der Rollenumlaufschuhe 10.1 in der Pendeltraverse 10.2 besteht eine Längs- und Querelastizität, so daß vorhandene Unebenheiten in zwei Richtungen automatisch ausgeglichen und jegliche Kantenpressungen vermieden werden. Die äußere Lagerschale 10.432 wird durch Sicherungsringe 10.44 axial arretiert.
Die beiden hinteren am Maschinenschlitten 4 angeordneten Wälzführungen 10 (Fig. 7) bestehen ebenfalls aus paarweise hintereinander angeordneten Rollenumlaufschuhen 10.1. Die Rollenumlaufschuhe 10.1 werden wiederum in Gleitlagern 10.4, die als Kalottenlager 10.43 ausgebildet sind und an den Enden der Pendeltraverse 10.2 angeordnet sind, aufgenommen.

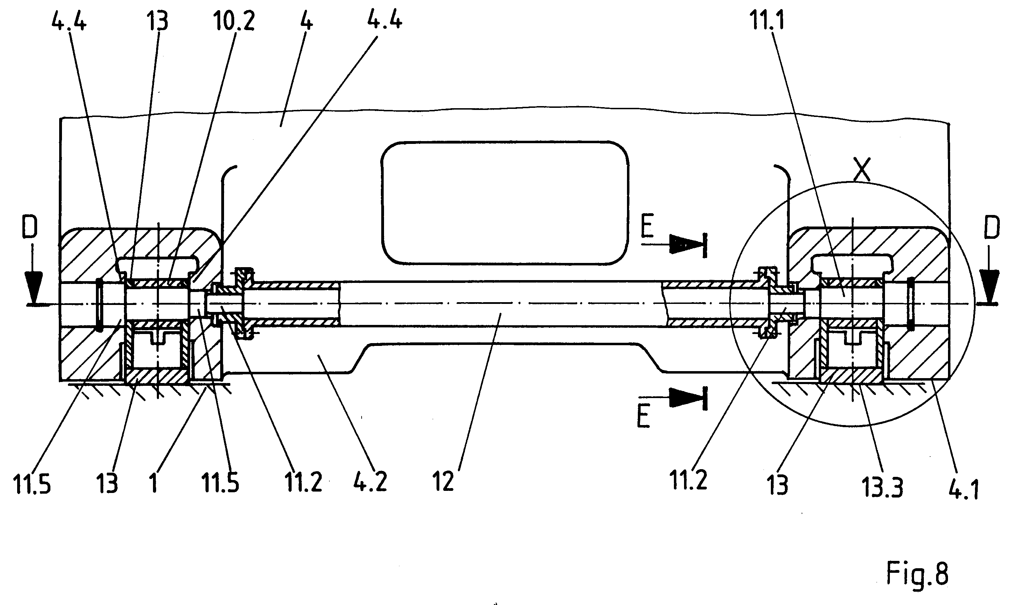

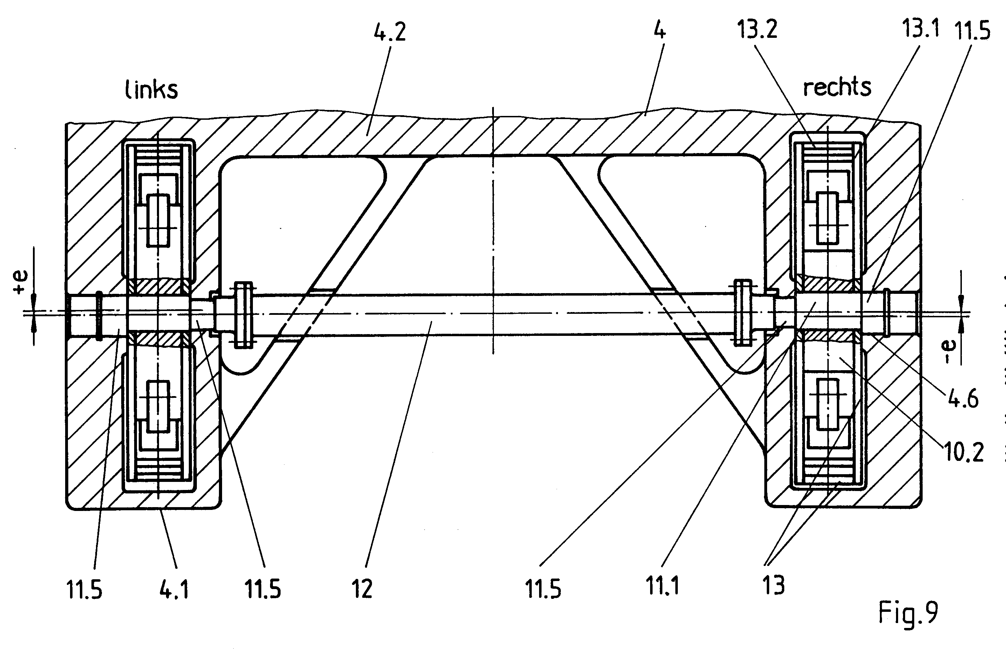

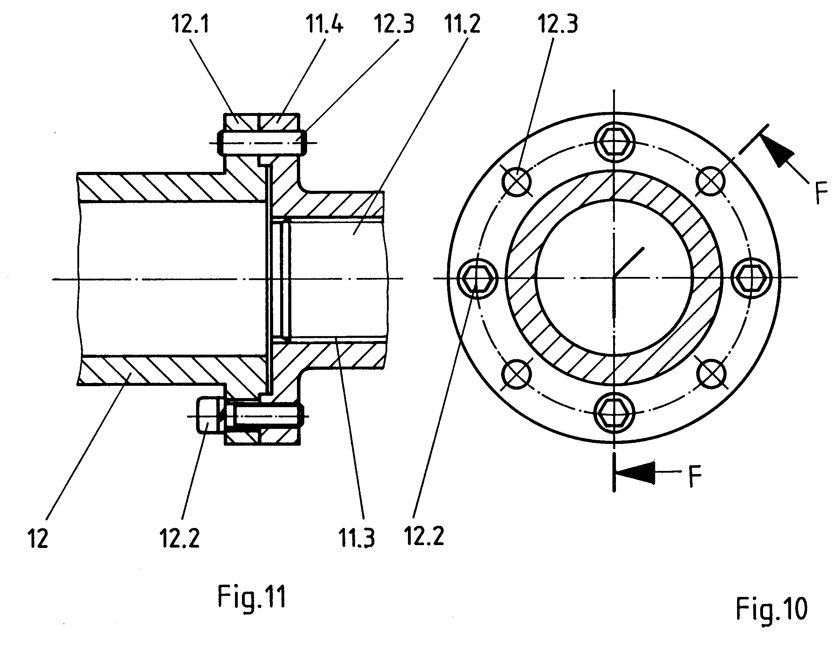

Wie aus den Figuren 3, 7, 8 und 9 erkennbar ist, werden die beiden hinteren Pendeltraversen 10.2 auf einem Exzenter 11.1 einer Exzenterwelle 11 gelagert. Aus der Draufsicht in Figur 3 und den Schnittdarstellungen in Figur 8 und 9 ist ersichtlich, daß die beiden Exzenterwellen 11 über einen Torsionsstab 12 fest miteinander verbunden sind und die Exzentrizitäten e der beiden Exzenterwellen 11 in der Horizontalebene entgegengesetzt zueinander gerichtet sind und mit +e bzw. -e bezeichnet sind. Die zur Längsmittelachse 4.3 des Maschinenschlittens 4 gerichteten zentrischen Abschnitte 11.2 von der Exzenterwelle 11 sind mit dem Torsionsstab 12 drehfest verbunden. Die Einzelheiten dieser drehfesten Verbindung sind in Figur 10 und 11 dargestellt. Der zur Längsmittelachse 4.3 des Maschinenschlittens 4 zeigende zentrische Abschnitt 11.2 der Exzenterwelle 11 besitzt am Ende ein Mitnahmeprofil 11.3 (vorzugsweise ein Evolventenprofil), über das die Verbindung zu einem Flansch 11.4 mit einem Evolventen-Nabenprofil hergestellt wird. Der Torsionsstab 12 besteht aus einem Rohr, das an beiden Enden ebenfalls je einen Flansch 12.1 besitzt. Die jeweils aneinanderliegenden Flansche 11.4 und 12.1 sind über Schraubverbindungen 12.2 fest miteinander verbunden und durch Stiftverbindungen 12.3 gegen Verdrehung gesichert.
Die unmittelbar neben jedem Exzenter 11.1 beidseitig vorhandenen zentrischen Abschnitte 11.5 von der Exzenterwelle 11 sind in Gleitlagern 4.6 des Maschinenschlittens 4 drehbeweglich gelagert (Fig. 9). Das Gleitlager 4.6 wird aus den zentrischen Abschnitten 11.5 der Exzenterwelle 11 und den Lagerbuchsen 4.61 und 4.62 gebildet, die fest in der Lagerstelle 4.4 des Maschinenschlittens angeordnet sind. Auf dem Exzenter 11.1 ist außerdem beidseitig von der Pendeltraverse 10.2 ein Tragrahmen 13 gelagert, auf dem der Maschinenschlitten 4 in dem Betriebszustand, wo die höchste Belastung auftritt, abgestützt wird. Dabei werden die Rollenumlaufschuhe dann entlastet, was an anderer Stelle noch ausführlich erläutert wird.

Jeder Tragrahmen 13 besteht aus zwei Seitenblechen 13.1 und stirnseitig und in der Mitte angeordneten Verbindungsblechen 13.2, die fest miteinander verbunden sind. An der Unterseite des Tragrahmens 13 sind Druckplatten 13.3 befestigt. Aus Figur 7 ist erkennbar, daß zwischen der Pendeltraverse 10.2 und dem Tragrahmen 13 zur Sicherung der Gleichgewichtslage bei Beschleunigung bzw. bei Verzögerung der bewegten Masse Druckfedern 13.4 angeordnet sind. Weiter wird vorgeschlagen, daß die Exzenterwelle 11 an den Außenseiten der Längsholme 4.1 vom Maschinenschlitten 4 durch einen Sicherungsring gegen axiale Verschiebung gesichert ist. Der Tragrahmen 13 und die Pendeltraverse 10.2 werden auf dem Exzenter 11.1 in Lagerbuchsen aufgenommen.

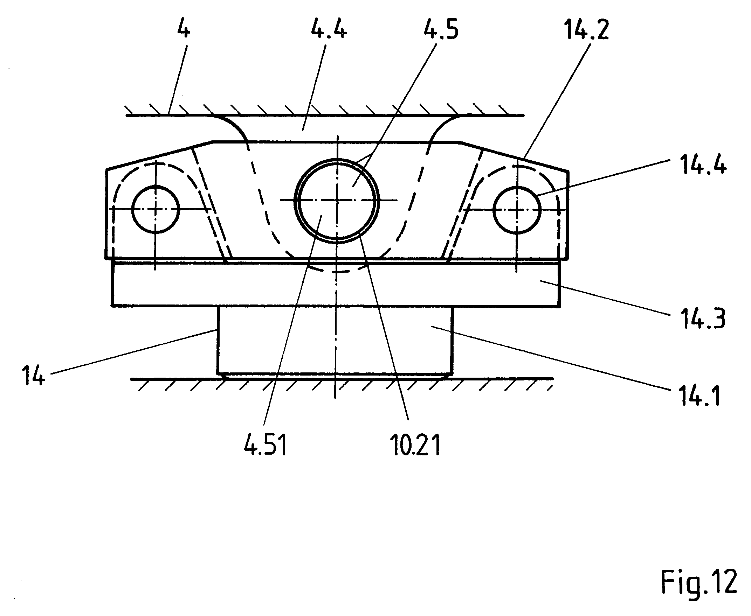

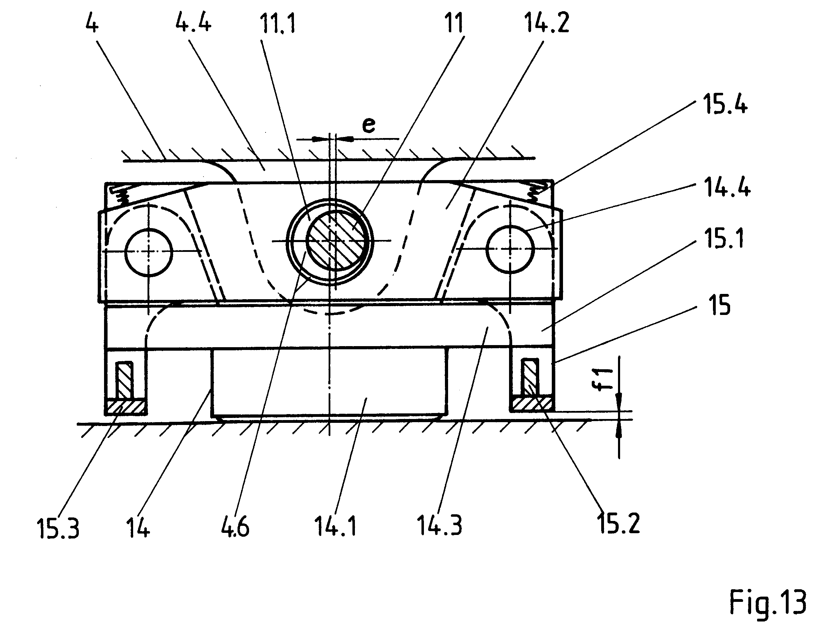

In Figur 12 und 13 sind die vordere und hintere Wälzführung 14 mit einem einzelnen Rollenumlaufschuh 14.1 in einer Pendeltraverse 14.2 dargestellt, die für geringere statische und dynamische Belastungen des Maschinenschlittens 4 vorgesehen sind. Der vordere Rollenumlaufschuh 14.1 ist an der Unterseite eines Lagerbockes 14.3 befestigt, der an seinen beiden äußeren Enden in jeweils einem Gleitlager 14.4 in der Pendeltraverse 14.2 aufgenommen wird. Das Gleitlager 14.4 entspricht dem Gleitlager 10.4 und ist ebenfalls als Kalottenlager ausgebildet und hat den gleichen konstruktiven Aufbau, der bereits in Figur 6 vergrößert dargestellt und entsprechend erläutert wurde. Die Pendeltraversen 14.2 werden in analoger und bereits beschriebener Weise mittels Gleitlagern 4.5 in Lagerstellen 4.4 des Maschinenschlittens 4 drehbeweglich aufgenommen.
Die hintere Anordnung des Rollenumlaufschuhes 14.1 am Maschinenschlitten 4 unterscheidet sich von der vorderen dadurch, daß die Pendeltraverse 14.2 in analoger Weise wie bei der Tandemanordnung mittels Gleitlager 14.4 drehbar auf dem Exzenter 11.1 von der Exzenterwelle 11 gelagert ist und dazu benachbart auf dem Exzenter 11.1 der Tragrahmen 15 mittels Lagerbuchse 15.5 drehbar gelagert ist. Bei der Beschreibung der Figuren 7, 8 und 9 wurde die prinzipielle Anordnung bereits erläutert. Der Tragrahmen 15 besteht ebenfalls aus Seitenblechen 15.1 und stirnseitig angeordneten Verbindungsblechen 15.2 und Druckplatten 15.3, die an der Unterseite befestigt sind.
Der Tragrahmen 15 wird auch bei dieser Anordnung während der Beschleunigung oder Verzögerung des Maschinenschlittens 4 mittels Druckfedern 15.4, die wie bereits beschrieben, zwischen Pendeltraverse 14.2 und Tragrahmen 15 angeordnet sind, im Gleichgewicht gehalten.

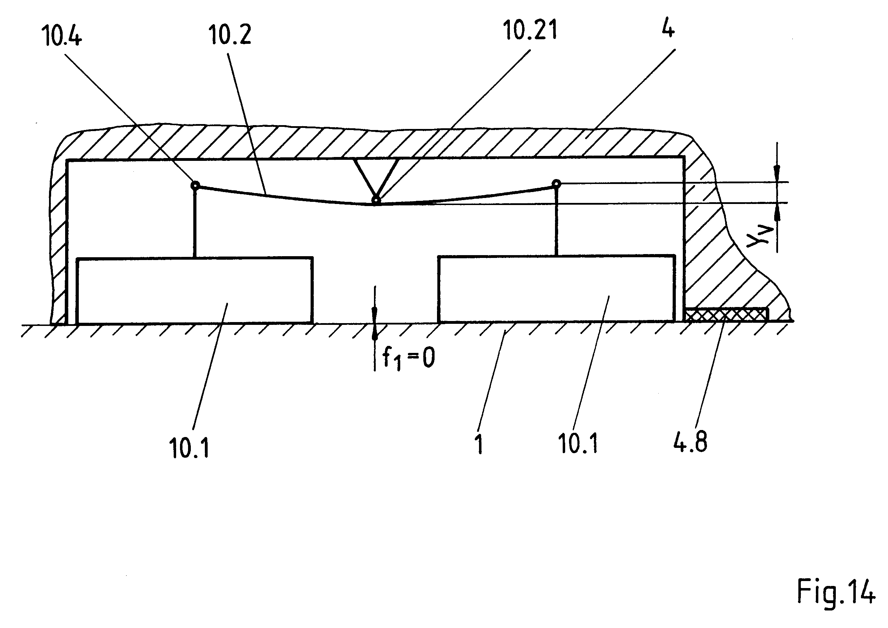

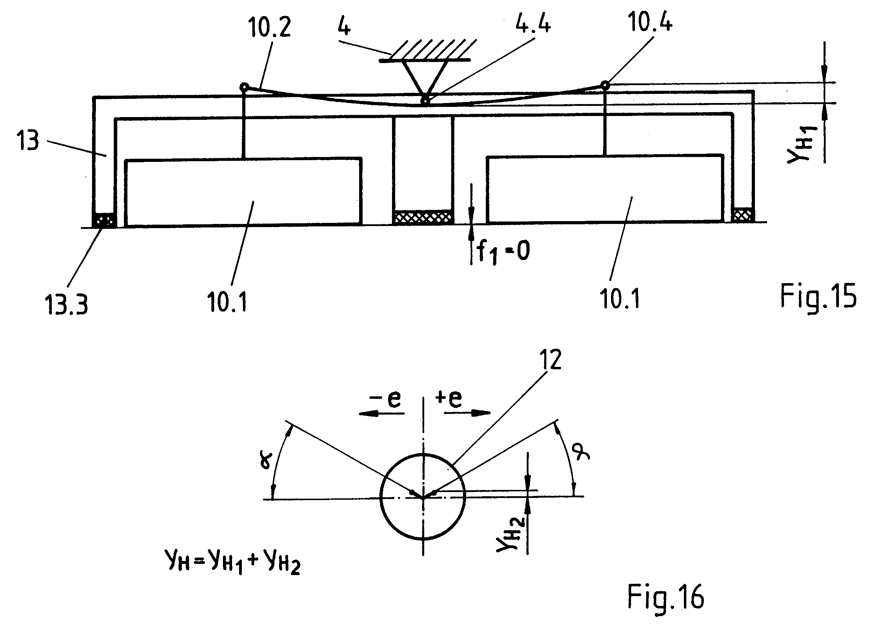

Nachstehend soll die Wirkungsweise der Erfindung in der Tandemanordnung der Pendeltraversen 10.2 beschrieben werden. Bereits bei der Montage des Maschinenschlittens 4 auf dem Maschinengestell 1 ist eine maximale Unebenheit vorhanden, wodurch nur eine der beiden Wälzführungen 10 von der hinteren Seite des Maschinenschlittens 4 Berührung mit der Führungsbahn des Maschinengestells 1 hat. Das hat zur Folge, daß sich der Torsionsstab 12 ohne Belastung in den Gleitlagern 4.6 zu drehen beginnt und die eine Pendeltraverse 10.2 um das halbe Maß der Unebenheit angehoben wird, während an der anderen berührungslosen Seite des Maschinenschlittens 4 eine entsprechende Absenkung der anderen Pendeltraverse 10.2 erfolgt, so daß unter Einbeziehung der Querdrehbewegung aller Kalottenlager 10.43 der vollständige Lastausgleich hergestellt ist. Damit die Wälzführung 10 während dieser Lastausgleichsbewegung nicht außer Funktion gerät, ist der Tragrahmen 13 mit auf dem Exzenter 11.1 gelagert, wodurch das Spiel f₁ zwischen der Lauffläche der Rollenumlaufschuhe 10.1 und der Auflagefläche der Druckplatten 13.3 vom Tragrahmen 13 bei dieser Lastausgleichsbewegung immer konstant bleibt (Fig. 7). Um zu verhindern, daß während der Verfahrbewegung des Maschinenschlittens 4 mit der beweglichen Werkzeugaufspannplatte 3 und der Formhälfte des Formwerkzeuges 5 die Druckplatten 13.3 vom Tragrahmen 13 die Führungsbahn berühren, wird dieser mit Druckfedern 13.4 an der Pendeltraverse 10.2 abgestützt. Durch die Druckfedern 13.4 wird das Kippmoment aufgenommen, das durch die Beschleunigungs- bzw. Verzögerungsbewegungen auf den Tragrahmen 13 wirkt. In der Öffnungsstellung der Formschließeinrichtung (Fig. 1) und während der Verfahrbewegung durch die Eilgangzylinder 8 aus bzw. in die Schließstellung biegen sich im elastischen Bereich die vorderen Pendeltraversen 10.2, die in Figur 4 und 14 schematisch dargestellt sind, um einen Teilbetrag Yᵥ durch. Zwischen den Druckplatten 4.8 und dem Maschinengestell 1 ist noch ein Spiel f₁ vorhanden, wodurch die Rollenumlaufschuhe 10.1 noch rollfähig sind (Fig. 4). Dabei sind die hinteren Rollenumlaufschuhe 10.1 infolge der Lastverteilung der auf dem Maschinenschlitten 4 bewegten Masse geringer belastet als die vorderen (Fig. 15). In diesem Betriebszustand biegen sich die hinteren Pendeltraversen 10.2 um einen kleineren Betrag Y_{H1} durch als die vorderen Pendeltraversen 10.2. Dazu überlagert erfolgt eine weitere Teilabsenkung der hinteren Pendeltraverse 10.2 infolge der elastischen Verdrehung des Torsionsstabes 12 um einen Betrag Y_{H2} (Fig. 16). Die Summe der Teilbeträge Y_{H1} + Y_{H2} ist die Gesamtdurchbiegung der hinteren Pendeltraversen, die zugleich der vorderen Durchbiegung Yᵥ entspricht.
Durch die erfindungsgemäße Lastausgleichseinrichtung ändert sich in den beiden o. g. Betriebszuständen (Öffnungsstellung und Fahrbewegung) die Neigung der beweglichen Werkzeugaufspannplatte 3 nicht. Auch an den hinteren Wälzführungen 10 bleibt noch ein Spiel f₁ zwischen den Druckplatten 13.3 und der Wälzebene auf dem Maschinengestell 1 vorhanden, wodurch auch die hinteren Rollenumlaufschuhe 10.1 rollfähig bleiben (Fig. 4). In der jüngeren Anmeldung (DE P 4425092.4-16) wird auch eine Lösung vorgeschlagen, wie dieses Spiel zwischen der Wälzebene und den Druckplatten 13.3 an der Unterseite von den Tragrahmen 13 einstellbar ist. Im entlasteten Zustand liegen am Torsionsstab 12 die zentrischen Lagerstellen und die exzentrischen Drehpunkte der Pendeltraversen 10.2 auf einer geraden Linie. Bei Belastung der Pendeltraversen 10.2 kommt es zu einer Verdrehung des Torsionsstabes 12, wodurch dann die genannten drei Punkte auf einer mehr oder weniger geknickten Linie liegen. Der Verdrehwinkel des Torsionsstabes 12 beträgt 2 (Fig. 16). Zu dieser Verdrehung des Torsionsstabes 12 überlagert sich eine Drehbewegung desselben als Lastausgleichsbewegung infolge vorhandener Unebenheiten bzw. einer ungleichmäßigen Kraftverteilung.
Erst unter den Bedingungen der statischen Verspannung des Formwerkzeuges 5 im geschlossenen Zustand der Formschließeinrichtung (Fig. 2) treten statische Zusatzkräfte auf, die die Kräfte aus den zuvor geschilderten Betriebszuständen um ca. 50 % überschreiten können. Bei dieser Krafteinwirkung federn die Pendeltraversen 10.2 mit den Rollenumlaufschuhen 10.1 soweit durch, daß das Restspiel f₁ = 0 wird (Fig. 14 und 15). Damit erfolgt eine exakte Lastbegrenzung für die Rollenumlaufschuhe 10.1, da nun die Druckplatten 4.8 und 13.3 auf den Führungsbahnen vom Maschinengestell 1 aufsetzen und die auftretenden Zusatzkräfte übernehmen. Aus diesem Grunde haben die Druckplatten 4.8 und 13.3 keine Gleitfunktion, sondern nur eine reine statische Aufgabe zu erfüllen. Bei den beiden hinteren Wälzführungen befinden sich die Druckplatten 13.3 an der Unterseite des Tragrahmens 13. Der Tragrahmen 13 ist sehr formstabil ausgebildet und mit der Pendeltraverse 10.2 auf dem Exzenter 11.1 von der Exzenterwelle 11 drehbar gelagert. Im Gegensatz dazu weist der Torsionsstab 12 in den Betriebszuständen mit geringer Belastung einen Verdrehwinkel auf, der mit der Durchfederung der hinteren Pendeltraversen 10.2 zusammen die gleiche Durchfederung ergibt, wie die Durchfederung aus den vorderen Pendeltraversen allein. Damit wird erreicht, daß der Maschinenschlitten 4 in den Betriebszuständen, in denen die Wälzführung 10 in Funktion ist, seine Horizontallage beibehält. In der Figur 4 wurde außerdem ein Spiel f₂ dargestellt, das eine konstruktiv gewählte Größe ist. Das Spiel f₂ ist der Abstand zwischen der Unterkante des Maschinenschlittens 4 und der Lauffläche der Rollenumlaufschuhe auf dem Maschinengestell. Durch das Spiel f₂ wird die Verträglichkeit der Wälzführung gegen maximal zu erwartende Maß- und Lageabweichungen der Führungsbahn des Maschinengestells und der Lagerpunkte im Maschinenschlitten 4 bestimmt.

## Patentansprüche

1. Formschließeinrichtung zur Aufnahme großer und schwerer Formwerkzeuge (5) für Kunststoffspritzgießmaschinen mit einer festen Werkzeugaufspannplatte (2) und einer beweglichen Werkzeugaufspannplatte (3), die bewegliche Werkzeugaufspannplatte (3) auf einem Maschinenschlitten (4) angeordnet ist der aus zwei Längsholmen (4.1) besteht, die durch ein Mittelstück (4.2) verbunden sind, die feste Werkzeugaufspannplatte (2) auf einem Maschinengestell (1) abgestützt ist und die bewegliche Werkzeugaufspannplatte über die Längsholme 4.1 des Maschinenschlittens 4 mittels Wälzführungen (10) und Führungsschienen auf dem Maschinengestell (1) verfahrbar aufgenommen sind, beide Werkzeugaufspannplatten je eine Formhälfte eines Formwerkzeuges (5) aufnehmen und über freitragende oder durchgehende Säulen (6) miteinander verbindbar oder verbunden sind, die Säulen in Abhängigkeit von der Werkzeugeinbauhöhe (H_{w}) durch eine Werkzeughöhenverstellvorrichtung (7) einstellbar sind, zum Zusammen- oder Auseinanderfahren der Formhälften des Formwerkzeuges (5) die bewegliche Werkzeugaufspannplatte (3) mit Hilfe von einem oder mehreren Eilgangzylindern (8) in die Öffnungs- oder Schließstellung gefahren wird und durch Schließzylinder (9) die Schließ- und Zuhaltekraft und die Aufreißkraft aufgebracht wird, dadurch gekennzeichnet, daß
- an den Eckpunkten des Maschinenschlittens (4) Lagerstellen (4.4) zur mittigen Aufnahme von Pendeltraversen (10.2, 14.2) angeordnet sind und an den Enden der Pendeltraversen (10.2, 14.2) in Gleitlagern (10.4, 14.4), die als Kalottenlager (10.43) ausgebildet sind, die Wälzführungen (10), bestehend aus an sich bekannten Rollenumlaufschuhen (10.1, 14.1), längs- und quer drehbeweglich gelagert sind,
- die vorderen Pendeltraversen (10.2, 14.2), die an der der festen Werkzeugaufspannplatte (2) zugewandten Seite des Maschinenschlittens (4) angebracht sind, an der Unterseite des Maschinenschlittens (4 ) in je einem Gleitlager (4.5) drehbeweglich gelagert sind,
- die Pendeltraversen (10.2, 14.2), die sich an der rückwärtigen Seite der beweglichen Werkzeugaufspannplatte (3) am Maschinenschlitten (4) befinden, von jeweils einem Exzenter (11.1) einer Exzenterwelle (11) aufgenommen werden,
- die zur Längsmittelachse (4.3) des Maschinenschlittens (4) gerichteten zentrischen Abschnitte (11.2) der Exzenterwellen (11) fest über einen Torsionsstab (12) so miteinander verbunden sind, daß die Exzentrizität (e) der beiden Exzenter (11.1) in der Horizontalebene eine entgegengesetzte Richtung zueinander hat,
- die beiden zum Exzenter (11.1) benachbarten zentrischen Abschnitte (11.5) jeder Exzenterwelle (11) in Gleitlagern (4.6) des jeweiligen Längsholmes (4.1) vom Maschinenschlitten (4) gelagert sind,
- auf jedem Exzenter (11.1) beidseitig von jeder Pendeltraverse (10.2, 14.2) ein Tragrahmen (13, 15) drehbeweglich angeordnet ist, der an seiner Unterseite Druckplatten (13.3, 15.3) besitzt, die auf dem Maschinengestell (1) abstützbar sind und
- an der Unterseite von den Längsholmen (4.1) des Maschinenschlittens (4) weitere Druckplatten (4.8) angeordnet sind.

2. Formschließeinrichtung nach Anspruch 1, dadurch gekennzeichnet, daß die an der Unterseite vom Maschinenschlitten (4) vorhandenen Druckplatten (4.8) in der Nähe vom Schwerpunkt (Sₒ) der bewegten Masse und an der Vorderseite vom Maschinenschlitten (4) angeordnet sind.

3. Formschließeinrichtung nach Anspruch 1 und 2, dadurch gekennzeichnet, daß bei Tandemanordnung der Rollenumlaufschuhe (10.1) in den Pendeltraversen (10.2) jeder Rollenumlaufschuh (10.1) mittig in einem Kalottenlager (10.43) aufgenommen wird.

4. Formschließeinrichtung nach Anspruch 1 und 2, dadurch gekennzeichnet, daß bei Einzelanordnung der Rollenumlaufschuhe (14.1) in den Pendeltraversen (14.2) jeder Rollenumlaufschuh (14.1) an seinen beiden Enden in je einem Kalottenlager (10.43) gelagert ist.

5. Formschließeinrichtung nach Anspruch 1, dadurch gekennzeichnet, daß die Tragrahmen (13, 15) durch Druckfedern (13.4, 15.4) an den Pendeltraversen (10.2, 14.2) abstützbar sind.

6. Formschließeinrichtung nach Anspruch 1, dadurch gekennzeichnet, daß die Rollenumlaufschuhe (14.1) einzeln in Pendeltraversen (14.2) über einen Lagerbock (14.3) aufgenommen sind.

7. Formschließeinrichtung nach Anspruch 1, dadurch gekennzeichnet, daß die Rollenumlaufschuhe (10.1) über Lagerböcke (10.3) in Pendeltraversen (10.2) mehrfach hintereinander aufgenommen sind.

8. Formschließeinrichtung nach Anspruch 1 und 7, dadurch gekennzeichnet, daß die Rollenumlaufschuhe (10.1) mehrfach nebeneinander über Lagerböcke (10.3) in Pendeltraversen (10.2) aufgenommen sind.

## Claims

1. Mould closing device for holding large and heavy moulds (5) for plastics injection moulding machines with a stationary mould mounting plate (2) and a movable mould mounting plate (3), wherein the movable mould mounting plate (3) is arranged on a machine carriage (4) consisting of two longitudinal members (4.1) which are connected together by a central piece (4.2), the stationary mould mounting plate (2) is supported on a machine stand (1) and the movable mould mounting plate is held such that it can travel on the machine stand (1) via the longitudinal members (4.1) of the machine carriage (4) by means of anti-friction guideways (10) and guide rails, both mould mounting plates hold a respective mould part of a mould (5) and can be or are connected together via cantilever or continuous pins (6), the pins can be adjusted by a mould height adjustment device (7) in accordance with the mould installation height (H_{w}), the movable mould mounting plate (3) is moved by means of one or more rapid-motion cylinders (8) into the open or closed position in order to move the mould parts of the mould (5) together or apart, and the closing and clamping force and the opening force are applied by closing cylinders (9), characterised in that
- bearing points (4.4) are arranged at the corner points of the machine carriage (4) to centrally hold pendulum crossbars (10.2, 14.2), and the anti-friction guideways (10), consisting of roller circulating shoes (10.1, 14.1) which are known per se, are mounted so that they can move longitudinally and rotate transversely at the ends of the pendulum crossbars (10.2, 14.2) in sliding-contact bearings (10.4, 14.4), which are formed as spherical bearings (10.43),
- the front pendulum crossbars (10.2, 14.2), which are attached to the side of the machine carriage (4) which faces the stationary mould mounting plate (2), are rotatably mounted in a respective sliding-contact bearing (4.5) at the underside of the machine carriage (4),
- the pendulum crossbars (10.2, 14.2), which are located at the rear side of the movable mould mounting plate (3) on the machine carriage (4), are in each case held
- y an eccentric (11.1) of an eccentric shaft (11), - the centric portions (11.2), which are directed towards the longitudinal central axis (4.3) of the machine carriage (4), of the eccentric shafts (11) are firmly connected together by a torsion bar (12) such that the eccentricities (e) of the two eccentrics (11.1) have opposite directions in the horizontal plane,
- the two centric portions (11.5) of each eccentric shaft (11) which are adjacent to the eccentric (11.1) are mounted in sliding-contact bearings (4.6) of the respective longitudinal member (4.1) of the machine carriage (4),
- a carrying frame (13, 15) is rotatably arranged on each eccentric (11.1) on both sides of each pendulum crossbar (10.2, 14.2) and has at its underside pressure plates (13.3, 15.3) which can be supported on the machine stand (1), and
- further pressure plates (4.8) are arranged at the underside of the longitudinal members (4.1) of the machine carriage (4).

2. Mould closing device according to claim 1, characterised in that the pressure plates (4.8) provided at the underside of the machine carriage (4) are arranged in the vicinity of the centre of gravity (Sₒ) of the moving mass and at the front side of the machine carriage (4).

3. Mould closing device according to claims 1 and 2, characterised in that, when the roller circulating shoes (10.1) are in a tandem arrangement in the pendulum crossbars (10.2), each roller circulating shoe (10.1) is held centrally in a spherical bearing (10.43).

4. Mould closing device according to claims 1 and 2, characterised in that, when the roller circulating shoes (14.1) are arranged individually in the pendulum crossbars (14.2), each roller circulating shoe (14.1) is mounted in a respective spherical bearing (10.43) at both its ends.

5. Mould closing device according to claim 1, characterised in that the carrying frames (13, 15) can be supported by compression springs (13.4, 15.4) at the pendulum crossbars (10.2, 14.2).

6. Mould closing device according to claim 1, characterised in that the roller circulating shoes (14.1) are held individually in pendulum crossbars (14.2) via a pedestal (14.3).

7. Mould closing device according to claim 1, characterised in that the roller circulating shoes (10.1) are held in a multiple arrangement one behind the other in pendulum crossbars (10.2) via pedestals (10.3).

8. Mould closing device according to claims 1 and 7, characterised in that the roller circulating shoes (10.1) are held in a multiple arrangement side by side in pendulum crossbars (10.2) via pedestals (10.3).

## Revendications

1. Dispositif de fermeture de moule pouvant recevoir de grands et lourds outils de montage (5) pour machines à mouler des matières plastiques par injection, dans lequel :
- il est prévu une plaque fixe (2), de serrage de l'outil et une plaque mobile (3) de serrage de l'outil, cette dernière étant montée sur un chariot de machine (4) constitué de deux longerons (4.1) reliés par une pièce médiane (4.2),
- la plaque fixe de serrage (2) s'appuie sur un bâti de machine (1) tandis que la plaque mobile de serrage (3) peut coulisser par l'intermédiaire de guides à rouleaux (10) et de rails de guidage sur le bâti (1) de la machine,
- les deux plaques de serrage reçoivent chacune une moitié d'un outil de moulage (5) et sont reliées ou peuvent l'être par des colonnes (6) en porte à faux ou traversantes qui sont réglables par un dispositif de réglage de hauteur d'outil (7) en fonction de la hauteur (H_{w}) d'installation de l'outil,
- pour assembler ou séparer par déplacement les moitiés de l'outil de moulage (5), la plaque mobile de serrage (3) est amenée à l'aide d'un ou plusieurs vérins (8) à mouvement rapide, en position d'ouverture ou de fermeture, tandis que des vérins de fermeture (9) fournissent la force de fermeture, la force de maintien et la force d'ouverture,
caractérisé en ce qu'
- aux angles du chariot de machine (2) se trouvent des points d'appui (4.4) accueillant les milieux de traverses oscillantes (10.2, 14.2) aux extrémités desquelles sont montés dans des paliers lisses (10.4, 14.4) du type à rotule sphérique (10, 43), les guides à rouleaux (10) qui sont constitués de patins à galets de circulation (10.1, 14.1) de type connu et qui peuvent se déplacer longitudinalement, transversalement et en rotation,
- les traverses oscillantes avant (10.2, 14.2), situées le long du côté du chariot (4) situé en face de la plaque fixe de serrage (2), sont montées sur la face inférieure du chariot (4), en rotation chacune sur un palier lisse (4, 5),
- les traverses oscillantes (10.2, 14.2), situées sur le chariot (4) vers le côté arrière de la plaque mobile de serrage (3), sont montées chacune sur la partie excentrée (11.1) d'un arbre à excentrique (11),
- les parties centrales (11.2) des arbres à excentrique (11) dirigées vers l'axe longitudinal médian (4,3) du chariot (4) sont solidarisées entre elles par une barre de torsion (12) de manière que l'excentricité (e) des deux excentriques (11.1) présentent, dans le plan horizontal , des directions opposées,
- les deux parties centrales (11.5) proches de l'excentrique (11.1) de chaque arbre à excentrique (11) sont montées dans des paliers de glissement (4.6) portés par le longeron (4.1) correspondant du chariot (4),
- sur chaque excentrique (11.1) et des deux côtés de chaque traverse oscillante (10.2, 14.2) est monté un cadre porteur (13, 15) mobile en rotation et qui possède sur sa face inférieure des plaques de pression (13.3, 15.3) qui peuvent s'appuyer sur le bâti (1) de la machine,
- sur la face inférieure des longerons (4.1) du chariot (4) sont montées d'autres plaques de pression (4.8).

2. Dispositif de fermeture selon la revendication 1,
caractérisé en ce que
les plaques de pression (4.8) montées sur la face inférieure du chariot (4) sont situées près du centre de gravité (Sₒ) de la masse mobile et le long du côté avant du chariot (4).

3. Dispositif selon la revendication 1 ou 2,
caractérisé en ce que
dans la disposition en tandem des patins à galets de circulation (10.1) dans les traverses oscillantes (10.2), chaque patin à galets (10.1) est monté au centre dans un roulement à rotule (10.43).

4. Dispositif selon les revendications 1 et 2,
caractérisé en ce que
par la disposition séparée des patins à galets de circulation (14.1) dans les traverses oscillantes (14.2), chaque patin (14.1) est disposé à ses deux extrémités dans chaque roulement à rotule (10.43).

5. Dispositif selon la revendication 1,
caractérisé en ce que
le cadre porteur (13, 15) peut s'appuyer sur les traverses oscillantes (10.2, 14.2) par des ressorts de compression (13.4, 15.4).

6. Dispositif selon la revendication 1,
caractérisé en ce que
les patins à galets de circulation (14.1) sont montés individuellement chacun dans les traverses (14.2), par l'intermédiaire d'une selle d'appui (14.3).

7. Dispositif selon la revendication 1,
caractérisé en ce que
les patins à galets de circulation (10.1) sont montés à plusieurs les uns derrière les autres par l'intermédiaire de selles d'appui (10.3), dans les traverses oscillantes (10.2).

8. Dispositif selon la revendication 1,
caractérisé en ce que
les patins à galets de circulation (10.1) sont montés à plusieurs les uns à côté des autres, par l'intermédiaire de selles d'appui (1O.3), dans les traverses oscillantes (10.2).
